# EUROPÄISCHE PATENTSCHRIFT

(11) **EP 0 769 340 B1**
(45) Veröffentlichungstag und Bekanntmachung des Hinweises auf die Patenterteilung: **27.10.1999**
(21) Anmeldenummer: 96113516.7
(22) Anmeldetag: 23.08.1996
(51) Int. Cl.: B23B 31/30

(54) **Spannantrieb, insbesondere für rotierend angetriebene Spannmittel von Werkzeugmaschinen**
Clamping drive, particularly for rotary-driven clamping means of machine tools
Motorisation de serrage, en particulier pour des moyens d'ablocage de machines-outil entraînées en rotation

(30) Priorität: 20.10.1995 DE 19539135
(43) Veröffentlichungstag der Anmeldung: 23.04.1997
(73) Patentinhaber: Berg & Co. GmbH, 33689 Bielefeld (DE)
(72) Erfinder: Kuckelsberg, Frank, Dipl.-Ing., 33647 Bielefeld (DE); Brangs, Eckhard, Dr.-Ing., 33689 Bielefeld (DE)
(74) Vertreter: Stracke, Alexander, Dipl.-Ing.

(56) Entgegenhaltungen:
- EP-A- 0 200 796
- EP-A- 0 220 134
- EP-A- 0 663 253
- DE-A- 2 419 808
- DE-A- 2 924 111

## Beschreibung

Die Erfindung betrifft einen Spannantrieb, insbesondere für rotierend angetriebene Spannmittel von Werkzeugmaschinen, mit einem rotierenden Spannzylinder mit einem Spannkolben, der auf seinen beiden Seiten mit dem Zylinderkörper Druckkammern begrenzt, die durch Rückschlagventile sperrbar sind, denen eine Drucküberwachungseinrichtung zugeordnet ist und die durch die Kolbenstange des Spannkolbens und eine ortsfeste Drehdurchführung, in der die Kolbenstange gelagert ist, mit einem Druckmittel speisbar sind.

Bei bekannten, handelsüblichen Spannantrieben werden die beiden sich gegenüberliegenden Druckkammern des Spannzylinders jeweils von einem ortsfesten Hydraulikaggregat mit Drucköl versorgt, das die Geschwindigkeit des Spannkolbens und den auf den Spannkolben wirkenden Druck bestimmt. Die Energieübertragung vom Hydraulikaggregat zum rotierenden Spannzylinder erfolgt über eine Drehdurchführung, die mit berührungslosen Spaltdichtungen arbeitet. Zur Aufrechterhaltung des Spanndruckes sind die Spannzylinder bekannter Bauart während des Lautes beispielsweise der Arbeitsspindel einer Werkzeugmaschine ständig mit Drucköl zu versorgen. Dabei ist das aus den Dichtspalten austretende Lecköl eine Verlustquelle, die mit dem Quadrat der Drehzahl wachsende viskose Reibung des Öles in den Dichtspalten ist eine weitere Verlustquelle. Beide Energieverluste bestimmen die Einsatzgrenzen der Drehdurchführung und damit des umlaufenden Spannzylinders sowohl bezüglich erreichbarer Drehzahlen wie bezüglich des erreichbaren Spanndruckes erheblich.

In dem Bemühen, diesen Nachteilen abzuhelfen, sind Spannantriebe der gattungsgemäßen Art vorgeschlagen worden (DE-OS 24 19 808, EP 0 220 134 B1), bei denen die Druckkammern jeweils mit sich gegenseitig entsperrenden Rückschlagventilen hermetisch sperrbar sind, so daß während des Laufes des Spannzylinders die Druckmittelversorgung im Prinzip abgeschaltet werden kann. Dabei ist aber aus Sicherheitsgründen die ständige Überwachung des Spanndruckes in den abgesperrten Zylinderkammern erforderlich. Bei diesem grundsätzlichen Aufbau ist es fenner zweckmäßig, zur Vermeidung der Energieverluste der Drehdurchführung dafür zu sorgen, daß sich nach Abschaltung der Druckmittelversorgung möglichst kein Druckmittel mehr in den Dichtspalten während des Laufes beispielsweise der Arbeitsspindel befindet.

Mit der Überwachung des Spanndruckes in der Druckkammer sind dabei Drucküberwachungseinrichtungen vorgeschlagen worden, die in ihrem grundsätzlichen Aufbau mechanisch wirkend ausgebildet sind, wozu den Druckkammern federbelastete, schwimmend angeordnete Hilfskolben zugeordnet sind, die gemeinsam über ein Gestänge axial verschieblich mit einem als Steuerscheibe wirkenden Ring fest verbunden sind. An einem feststehenden Bereich des Antriebs ist axial verschieblich ein Wegfühler vorgesehen. Bei Abfall des Spanndruckes verlagert sich die ringförmige Steuerscheibe, was der Wegfühler erkennt. Dabei kann der Wegfühler durch Axialverschiebung auf den zu überwachenden Spanndruck eingestellt werden. Diese Drucküberwachung wird zwar als automatisch bezeichnet, ist es jedoch nicht, da das Bedienungspersonal den Wegfühler nach dem werkstückbedingten Verstellen des Spanndruckes von Hand nachführen muß. Der Bediener bleibt also als erhebliches Sicherheitsrisiko erhalten. Befindet sich bei den bekannten Ausgestaltungen in einer der beiden Druckkammern der gewünschte Spanndruck und ist gleichzeitig in der anderen Druckkammer noch ein Restdruck vorhanden, wirkt nur die Differenz beider Drücke als Kraft auf die Kolbenstange. Allein diese resultierende Kraft ist für die Spannkraft maßgebend. Der Restdruck in der anderen Druckkammer kann z. B. dadurch entstehen, daß das diese Druckkammer sperrende Rückschlagventil mechanisch defekt ist und nicht geöffnet hat. Die bekannte Drucküberwachungseinrichtung kann jedoch nicht unterscheiden, ob sich nur in der einen Druckkammer der gewünschte Spanndruck oder ob sich auch noch ein Restdruck in der anderen Druckkammer befindet. Würde, was in der Praxis nicht ausgeschlossen werden kann dieser Restdruck die Größe des gewünschten Spanndruckes erreichen, wäre die Spannkraft praktisch Null. Diesen äußerst kritischen Betriebszustand des Spannzylinders können die bekannten Drucküberwachungseinrichtungen nicht erkennen. Sie melden vielmehr, daß der gewünschte Spanndruck vorhanden ist. Dies ist der Grund dafür, daß derartige Spannzylinder bislang keinen Eingang in die Praxis gefunden haben. Da bei den bekannten Drucküberwachungseinrichtungen für beide Druckkammern nur ein Wegfühler zur Verfügung steht, kann dieser naturgemäß nicht erkennen, in welcher Druckkammer Druck aufgebaut ist und in welche Richtung dementsprechend die Kolbenstange fährt. Für die Steuerung der Maschine ist es jedoch wichtig, bestätigt zu bekommen, daß die Kolbenstange in die gewünschte Richtung bewegt wird bzw. um erkennen zu können, ob die Kolbenstange eine Zug-oder eine Druckkraft zur Betätigung beispielsweise eines Spannfutters liefert.

Bezüglich der grundsätzlich bei mittels Rückschlagventilen und absperrbaren Druckkammern möglichen Austreibung des Druckmittels aus den Spaltdichtungen in der Drehdurchführung im Hinblick auf ein verlustfreies Arbeiten ist einerseits vorgeschlagen worden (De-OS 24 19 808), das sich in den Dichtspalten befindliche Öl mit Druckluft auszublasen. Hierzu ist jedoch in nachteiliger Weise eine zusätzliche Energiequelle erforderlich und es müssen gesonderte Ringnuten in der Drehdurchführung vorgesehen werden sowie Ventile vorhanden sein. Der beim Ausblasen der Dichtspalte entstehende Öl-Luft-Nebel dürfte in der Praxis nicht zu beherrschen sein, da die üblicherweise in solchen Drehdurchführungen einzusetzenden Labyrinthdichtungen im Stillstand unwirksam sind. Es ist im Zusammenhang mit der Austreibung des Drucköles aus den Dichtspalten auch vorgeschlagen worden (EP 0 220 134 B1), der Drehdurchführung einen zusätzlich im umlaufenden Bereich des Spannzylinders untergebrachten Steuerblock zuzufügen, der nur dann an den Spannzylinder axial herangefahren wird, wenn Drucköl in eine der beiden Druckkammern eingeleitet werden soll. Ist der Aufladevorgang in der Druckkammer abgeschlossen, wird der Steuerblock von Federn in seine Ausgangsposition zurückgestellt. Der durch die Überwachungseinrichtung sowieso schon hohe mechanische Aufwand wird auf diese Weise nochmals erheblich erhöht. Es ergibt sich auch eine Vergrößerung des Bauvolumens, die räumlich in der Praxis kaum zu verwirklichen sein dürfte. Darüber hinaus dürfte es in der Praxis schwierig sein, die Größe der erforderlichen Anpreßkraft des Steuerblockes zu ermitteln. Wählt man sie zu groß, tritt eine unzulässige metallische Berührung von Steuerblock und Wandung des Spannzylinders auf, ist die Anpreßkraft zu gering, ist der Energieverlust während der Druckübertragung zu groß. Hieraus kann ein unkontrollierbares Funktionsrisiko resultieren.

Der vorliegenden Erfindung liegt von daher im wesentlichen die Aufgabe zugrunde, einen Spannantrieb der gattungsgemäßen Art mit einer den Sicherheitsforderungen gerecht werdenden, automatischen Spanndrucküberwachung zu schaffen, so daß zuverlässig mit mittels Rückschlagventilen hermetisch absperrbaren Druckkammern im rotierenden Spannzylinder gearbeitet werden kann und gefahrenlos die Druckmittelzufuhr in der Betriebsphase abgeschaltet werden kann.

Die erfindungsgemäße Lösung besteht darin, daß jeder Druckkammer für eine getrennte und voneinander unabhängige Druckmessung ein eigener Drucksensor mit druckproportionaler elektrischer Signalabgabe zugeordnet ist und elektrisch das analoge Differenzdruck-Signal aus den beiden Druckmessungen der beiden Druckkammern gebildet wird.

Dank der erfindungsgemäßen Ausgestaltung ist eine außerordentlich hohe Betriebssicherheit auch noch bei abgesperrten Druckkammern und abgeschalteter Druckmittelzufuhr gewährleistet. Es ist eine kontinuierliche automatische, keinerlei Eingriffe von Hand benötigende Überwachung des Druckes gegeben, und zwar immer des für die tatsächlich zur Verfügung stehende Spannkraft allein relevanten Differenzdruckes. Mit dieser Anordnung kann problemlos der Maschinensteuerung das Differenzdruck-Signal als Regelgröße aus beiden Druckzylindern auch vorzeichengerecht zur Verfügung gestellt werden, so daß erkennbar ist, ob die Kolbenstange eine Zug- oder Druckkraft aufgebaut hat. Es ergibt sich insgesamt eine funktionssichere, automatische und tatsächliche Inprozeß-Messung während beispielsweise der Bearbeitung eines Werkstückes.

Der erfindungsgemäße Aufbau hat den Vorteil, daß derartige heutzutage in kleinen Abmessungen erhältliche Drucksensoren es ermöglichen, die Spannzylinder deutlich kleiner zu bauen als bisher. Man ist in der Gestaltung auch außerordentlich flexibel, da die Drucksensoren im Prinzip an beliebiger Stelle angeordnet werden können. Es kann zweckmäßig sein, sie in der Nähe des in der Drehdurchführung befindlichen Endes der Kolbenstange anzuordnen und sie jeweils mit durch die Kolbenstange verlaufenden Druckmittelkanälen mit den Druckkammern zu verbinden. Auf diese Weise ergeben sich kurze Wege für die elektrische Verdrahtung mit einem in besonders zweckmäßiger Ausgestaltung in diesem Ende der Kolbenstange vorgesehenen, mitrotierenden Sender, dem eng benachbart für eine drahtlose Übertragung in der ortsfesten Drehdurchführung gegenbüberliegend ein Empfänger angeordnet ist.

In einer weiteren besonders vorteilhaften Ausgestaltung wird das analoge Differenzdruck-Signal bereits in dem rotierenden Sender gebildet, da dann nur ein elektrisches Signal vom Sender zum Empfänger zu übertragen ist, also einkanalig gearbeitet wird. Da nunmehr bei voller Gewährleistung der Betriebssicherheit die Druckmittelzufuhr während des Betriebes abgeschaltet werden kann, kann nunmehr auch die Drehdurchführung praktisch verlustfrei arbeiten, und zwar bei jeder Drehzahl und bei jedem Druck, so daß die bisherigen insoweit vorhandenen erheblichen Einsatzbeschränkungen derartiger rotierender Spannantriebe praktisch entfallen. In besonders zweckmäßiger Ausgestaltung wird erfindungsgemäß die Beseitigung des Restdruckmittels, also insbesondere des Restdrucköles in den berührungslosen Dichtspalten der Drehdurchführung dadurch gewährleistet, daß in den entsprechenden Dichtspaltbereichen in der Oberfläche der Kolbenstange schraubig verlaufende Mikrorillen vorgesehen sind, mit deren Hilfe in Art einer viskohydraulischen Pumpe das Restöl aus den Dichtspalten herausgefördert wird. In weiterer sehr zweckmäßiger Ausgestaltung ist die Anordnung so getroffen, daß mit diesem Restöl die beiden Wälzlager geschmiert werden können, mit denen die Kolbenstange in der Drehdurchführung gelagert ist.

Ein Ausführungsbeispiel eines Spannantriebes gemäß der Erfindung wird nachstehend unter Bezugnahme auf die Zeichnung näher beschrieben. Es zeigen:
- Figur 1: einen Spannantrieb gemäß der Erfindung im Längsschnitt,
- Figur 2: eine Teilschnittdarstellung in vergrößertem Maßstab durch eine Lichtspaltzone zwischen Kolbenstange und Drehdurchführung.

Der Spannantrieb beinhaltet einen rotierenden Spannzylinder 1, dessen Zylinderkörper 2 beispielsweise mit Hilfe von Gewindebohrungen 3 mit einer rotierenden Spindel einer Maschine, insbesondere beispielsweise der Arbeitsspindel einer Werkzeugmaschine, fest verbunden werden kann. In dem Zylinderkörper 2 des Spannzylinders 1 befindet sich ein Spannkolben 4, der auf seinen beiden Seiten mit dem Zylinderkörper 1 Druckkammern 5 und 6 begrenzt. Die Kolbenstange 7 des Spannkolbens 4 ist mit einem Innengewinde 8 beispielsweise über eine Zugstange mit einem Kraftspannzeug am anderen Ende der Arbeitsspindel verbunden. Zugstange, Arbeitsspindel und Kraftspannzeug sind aus Gründen der Vereinfachung nicht dargestellt.

Die Kolbenstange 7 des Spannkolbens 4 ist an ihrem einen Ende in einer ortsfest angeordneten Drehdurchführung 9 mittels zweier Wälzlager 10 drehbar gelagert. In der Drehdurchführung 9 befinden sich Druckmitteleinspeisungen 11, 12, die ihrerseits mit einem entsprechend steuerbare Ventile beinhaltendem Hydraulikaggregat bekannter Bauart verbunden sind. Die Druckmitteleinspeisungen 11, 12 sind mittels über in der Kolbenstange 7 vorgesehene Druckmittelkanäle 13, 14 mit den Druckkammern 5, 6 verbunden. Im Wege der Druckmittelkanäle 13, 14 befinden sich, jeweils einer der Druckkammern 5, 6 zugeordnet, im Spannkolben 4 Rückschlagventile 15, 16, die gewährleisten, daß nach einer Beaufschlagung einer der Druckkammern 5, 6 mit dem gewünschten Spanndruck durch entsprechende Beschickung mit dem Druckmittel, vorzugsweise Drucköl, der Spanndruck in dieser Druckkammer aufrecht erhalten bleibt, auch wenn die Druckmittelversorgung dann für die Betriebsphase abgeschaltet wird.

Um nun zur betriebssicheren Überwachung des Spanndruckes in den Druckkammern 5, 6 diesen kontinuierlich überwachen zu können, ist jeder Druckkammer 5 und 6 jeweils ein eigener Drucksensor 17 bzw. 18 zugeordnet. Es handelt sich dabei um klein bauende Drucksensoren mit einerseits einem Druckmittelanschluß und andererseits einem elektrischen Signalausgang. Mit diesen Drucksensoren 17 und 18 kann der Druck jeder Druckkammer getrennt unabhängig voneinander gemessen werden, wobei der Drucksensor ein druckproportionales elektrisches Signal abgibt.

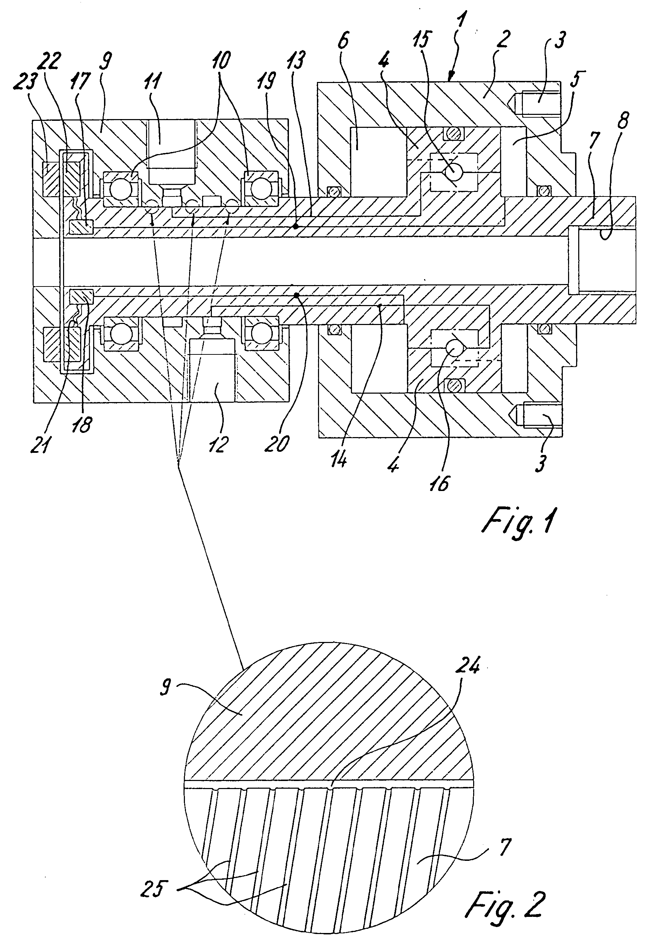

Grundsätzlich ist die Anordnung der Drucksensoren 17, 18 für die direkte kontinuierliche Druckmessung in den Druckkammern 5, 6 beliebig. In dem in Figur 1 dargestellten Ausführungsbeispiel sind in zweckmäßiger Ausgestaltung die Drucksensoren 17, 18 in dem in der Drehdurchführung 9 gelagerten Endbereich der Kolbenstange 7, in der Nähe des Endes dieser Kolbenstange, angeordnet, so daß zwei etwas längere Druckmittelkanäle 19, 20 in der Kolbenstange 7 benötigt werden, die zu den Druckkammern 5, 6 führen, dafür aber die elektrische Verdrahtung 21 zu einem rotierenen Sender 22 kurzgehalten werden kann, der in das hier betroffene Ende der Kolbenstange 7 eingesetzt ist. Dem Sender 22 benachbart und gegenüberliegend für eine drahtlose Übersendung der Signale des Senders 22 ist ein Empfänger 23 vorgesehen, der sich bei dieser Ausführungsform in der ortsfesten Drehdurchführung 9 befindet.

Jeder Drucksensor 17, 18 liefert somit ein dem in der jeweiligen Druckkammer 5, 6 herrschenden Druck proportionales Spannungssignal, das von dem Sender 22 drahtlos zum Empfänger 23 übertragen wird. Aus diesen Spannungssignalen der beiden Drucksensoren 17, 18 wird nun elektrisch ein analoges Differenzdruck-Signal gebildet, was in zweckmäßiger Ausgestaltung bereits in dem rotierenden Sender 22 geschieht, so daß dann nur ein Signal vom Sender 22 zum Empfänger 23 zu übertragen ist, also einkanalig gearbeitet werden kann. Vom Empfänger 23 kann damit der Steuerung der Maschine dasjenige Differenzdruck-Signal zur Verfügung gestellt werden, das der alleinig relevanten Differenz der Drücke in den Druckkammern 5, 6 entspricht, da nur aus diesem Differenzdruck die auf die Kolbenstange 7 einwirkende Kraft resultiert. Dies kann problemlos auch vorzeichengerecht geschehen, so daß die Steuerung der Maschine auch jederzeit weiß, ob die Kolbenstange 7 eine Zug-oder eine Druckkraft ausübt.

In einer weiteren Ausführungsform der Drucküberwachungseinrichtung ist es auch möglich, die Drucksensoren und den Sender im Zylinderkörper 1 unterzubringen. Auch in diesem Fall könnte der Empfänger, wiederum dem Sender gegenüberliegend, an der Drehdurchführung befestigt sein.

Nachdem dank der beschriebenen Ausgestaltung nach Erzeugung des erforderlichen Spanndruckes und damit Erzielung der erforderlichen Spannkraft am Kraftspannzeug, beispielsweise einem Spannfutter, die Druckmittelzufuhr bei voller Gewährleistung der Betriebssicherheit abgeschaltet werden kann, können nun auch die die Einsatzgrenzen einer derartigen Drehdurchführung bestimmenden Verluste vermieden werden. Hierzu ist es erforderlich, nach Abschalten der Druckmittelzufuhr die axialen Dichtspalte 24, mit denen die Abdichtung der Druckmittelzufuhr zwischen dem Mantel der Kolbenstange 7 und der Drehdurchführung 9 erfolgt, von den Druckmittelresten, insbesondere also den Druckölresten, zu befreien. Um dies in besonders einfacher und wirkungsvoller Weise zu tun, sind in den entsprechenden Mantelbereichen der rotierenden Kolbenstange 7, die mit der Drehdurchführung 9 diese axialen Dichtspalte 24 bilden, schraubenlinig verlaufende Mikrorillen vorgesehen. Solche Mikrorillen entstehen z. B. in einfacher Weise bei der Fertigbearbeitung des Kolbenstangenmantels durch Feindrehen. Diese in der Relation zur Höhe des Dichtspaltes 24 durchaus tiefen Mikrorillen 25 wirken in Verbindung mit der sehr geringen Dichtspalthöhe und der Viskosität des Drucköles als viskohydraulische Pumpe, die das restliche Drucköl aus den Dichtspalten 24 herausfördert. Diese Dichtspaltbereiche und die Mikrorillenzonen auf dem Mantel der Kolbenstange 7 sind zwischen den beiden Wälzlagern 10 angeordnet. Je nach Drehrichtung der Anordnung wird das restliche Drucköl damit in eines der beiden Wälzlager 10 gefördert, wo es zur Lagerschmierung genutzt wird. Die Wälzlagerung kann von daher nun auch von aus der Druckmittelübertragung herührenden Kräften freigehalten werden.

## Patentansprüche

1. Spannantrieb insbesondere für rotierend angetriebene Spannmittel von Werkzeugmaschinen, mit einem rotierenden Spannzylinder (1) mit einem Spannkolben (4), der auf seinen beiden Seiten mit dem Zylinderkörper (2) Druckkammern (5, 6) begrenzt, die durch Rückschlagventile (15, 16) absperrbar sind, denen eine Drucküberwachungseinrichtung zugeordnet ist und die durch die Kolbenstange (7) des Spannkolbens (4) und eine ortsfeste Drehdurchführung (9), in der die Kolbenstange (7) gelagert ist, mit Druckmittel speisbar sind, **dadurch gekennzeichnet, daß** jeder Druckkammer (5, 6) für eine getrennte und voneinander unabhängige Druckmessung ein eigener Drucksensor (17, 18) mit elektrischer Signalabgabe zugeordnet ist und elektrisch das analoge Differenzdruck-Signal aus den beiden Druckmessungen der beiden Druckkammern (5, 6) gebildet wird.

2. Spannantrieb nach Anspruch 1, **dadurch gekennzeichnet, daß** die beiden Drucksensoren (17, 15) mit ihren elektrischen Signalauslässen mit einem Sender (22) verbunden sind, der mitdreht und dem gegenüber ortsfest ein Empfänger (23) für die drahtlose Signalübersendung angeordnet ist.

3. Spannantrieb nach Anspruch 2, **dadurch gekennzeichnet, daß** die elektrische Bildung des analogen Differenzdruck-Signales in dem mitdrehenden Sender (22) erfolgt.

4. Spannantrieb nach einem der vorhergehenden Ansprüche, **dadurch gekennzeichnet, daß** die Drucksensoren (17, 18) in der Kolbenstange (7) angeordnet sind.

5. Spannantrieb nach Anspruch 4, **dadurch gekennzeichnet, daß** die Drucksensoren (17, 18) in der Kolbenstange (17) in dem in der Drehdurchführung (9) gelagerten Bereich der Kolbenstange (7) angeordnet sind und der Sender (22) benachbart dazu in der Endfläche der Kolbenstange (17) angeordnet ist während der Empfänger (23) in einem gegenüberliegenden Bereich der Drehdurchführung (9) angeordnet ist.

6. Spannantrieb nach einem der Ansprüche 1-3, **dadurch gekennzeichnet, daß** die Drucksensoren in dem Zylinderkörper des Spannzylinders angeordnet sind.

7. Spannantrieb nach Anspruch 1, mit einer Einrichtung zur Beseitigung des restlichen Druckmittels aus Dichtspalten (24) zwischen der Kolbenstange (17) des Spannkolbens (4) und der Drehdurchführung (9), **dadurch gekennzeichnet, daß** die Einrichtung durch schraubenlinienförmige Mikrorillen (25) in der Mantelfläche der Kolbenstange (7) im Bereich der Dichtspalte (24) gebildet ist.

8. Spannantrieb nach Anspruch 7, **dadurch gekennzeichnet, daß** sich die Dichtspalte (24) und der die Mikrorillen (25) tragende Bereich der Kolbenstange (7) zwischen den beiden Wälzlagern (10) befinden, mit denen die Kolbenstange (7) in der Drehdurchführung (9) gelagert ist.

## Claims

1. A clamping drive in particular for rotatingly driven clamping means of machine tools, comprising a rotating clamping cylinder (1) with a clamping piston (4) which on its two sides defines with the cylinder body (2) pressure chambers (5, 6) which can be shut off by check valves (15, 16) and with which a pressure monitoring device is associated and which can be fed with pressure fluid through the piston rod (7) of the clamping piston (4) and a stationary rotary transfer assembly (9) in which the piston rod (7) is supported, characterised in that associated with each pressure chamber (5, 6) for separate and mutually independent pressure measurement is its own pressure sensor (17, 18) with electrical signal output and the analog differential pressure signal is electrically formed from the two pressure measurements of the two pressure chambers (5, 6).

2. A clamping drive according to claim 1 characterised in that the two pressure sensors (17, 15) are connected with their electrical signal outlets to a transmitter (22) which rotates therewith and stationarily in relation to which is arranged a receiver (23) for wireless signal transmission.

3. A clamping drive according to claim 2 characterised in that electrical formation of the analog differential pressure signal is effected in the rotating transmitter (22).

4. A clamping drive according to one of the preceding claims characterised in that the pressure sensors (17, 18) are arranged in the piston rod (7).

5. A clamping drive according to claim 4 characterised in that the pressure sensors (17, 18) are arranged in the piston rod (17) in the region thereof which is supported in the rotary transfer assembly (9) and the transmitter (22) is arranged adjacent thereto in the end face of the piston rod (17) while the receiver (23) is arranged in an oppositely disposed region of the rotary transfer assembly (9).

6. A clamping drive according to one of claims 1 to 3 characterised in that the pressure sensors are arranged in the cylinder body of the clamping cylinder.

7. A clamping drive according to claim 1 having a device for eliminating the remaining pressure fluid from sealing gaps (24) between the piston rod (17) of the clamping piston (4) and the rotary transfer assembly (9), characterised in that the device is formed by helical microgrooves (25) in the peripheral surface of the piston rod (7) in the region of the sealing gaps (24).

8. A clamping drive according to claim 7 characterised in that the sealing gaps (24) and the region of the piston rod (7) which carries the microgrooves (25) are disposed between the two rolling bearings (10) with which the piston rod (7) is supported in the rotary transfer assembly (9).

## Revendications

1. Motorisation de serrage notamment pour moyens de serrage entraînés en rotation de machines-outils, comportant un vérin de serrage (1) rotatif avec un piston de serrage (4) qui délimite, sur ses deux côtés, avec le corps de cylindre (2), des chambres de pression (5, 6) qui peuvent être fermées par des clapets anti-retour (15, 16), auxquelles est affecté un dispositif de contrôle de pression et qui peuvent être alimentées en fluide sous pression par la tige de piston (7) du piston de serrage (4) et par un passage tournant (9) fixe, dans lequel est montée la tige de piston (7), caractérisée en ce qu'à chaque chambre de pression (5, 6) est affecté son propre capteur de pression (17, 18), avec délivrance de signaux électriques, pour une mesure séparée et indépendante l'une de l'autre de la pression, et le signal de pression différentiel analogique est électriquement formé à partir des deux mesures de la pression des deux chambres de pression (5, 6).

2. Motorisation de serrage selon la revendication 1, caractérisée en ce que les deux capteurs de pression (17, 18) sont reliés, par leurs sorties de signaux électriques, à un émetteur (22), qui tourne en même temps et face auquel est disposé de manière stationnaire un récepteur (23) pour la transmission sans fil des signaux.

3. Motorisation de serrage selon la revendication 2, caractérisée en ce que la formation électrique du signal de pression différentiel analogique s'effectue dans l'émetteur (22) tournant en même temps.

4. Motorisation de serrage selon l'une des revendications précédentes, caractérisée en ce que les capteurs de pression (17, 18) sont disposés dans la tige de piston (7).

5. Motorisation de serrage selon la revendication 4, caractérisée en ce que les capteurs de pression (17, 18) dans la tige de piston (7) sont disposés dans la zone de la tige de piston (7) montée dans le passage tournant (9) et l'émetteur (22) est disposé au voisinage de celui-ci, dans la surface terminale de la tige de piston (7), tandis que le récepteur (23) est disposé dans une zone opposée du passage tournant (9).

6. Motorisation de serrage selon l'une des revendications 1 à 3, caractérisée en ce que les capteurs de pression sont disposés dans le corps du cylindre de serrage.

7. Motorisation de serrage selon la revendication 1, comportant un dispositif destiné à éliminer le fluide sous pression résiduel des fentes d'étanchéité (24) entre la tige de piston (7) du piston de serrage (4) et le passage tournant (9), caractérisée en ce que le dispositif est constitué par des micro-gorges (25) hélicoïdales dans la surface d'enveloppe de la tige de piston (7), dans la région de la fente d'étanchéité (24).

8. Motorisation de serrage selon la revendication 7, caractérisée en ce que la fente d'étanchéité (24) et la zone de la tige de piston (7), portant les micro-gorges (25), se trouvent entre les deux paliers de roulement (10) par lesquels la tige de piston (7) est montée dans le passage tournant (9).
